# EUROPEAN PATENT SPECIFICATION

(11) **EP 3 062 474 B1**
(45) Date of publication and mention of the grant of the patent: **26.09.2018**
(21) Application number: 15382075.8
(22) Date of filing: 24.02.2015
(51) Int. Cl.: H04L 29/06

(54) **METHOD, DEVICE, COMPUTER PROGRAM PRODUCT AND STORAGE MEDIUM FOR DISTRIBUTING FILE REQUESTS IN ADAPTIVE STREAMING SYSTEMS**
VERFAHREN, VORRICHTUNG, RECHNERPROGRAMMPRODUKT UND SPEICHERMEDIUM ZUR VERTEILUNG VON DATEIANFRAGEN IN ADAPTIVEN STREAMING-SYSTEMEN
PROCÉDÉ, DISPOSITIF, PRODUIT PROGRAMME D'ORDINATEUR ET SUPPORT D'ENREGISTREMENT DE DISTRIBUTION DE DEMANDES DE FICHIER DANS DES SYSTÈMES DE TRANSMISSION EN CONTINU ADAPTATIVE

(43) Date of publication of application: 31.08.2016
(73) Proprietor: Alcatel-Lucent España, S.A., 28050 Madrid (ES)
(72) Inventor: Ruiz Alonso, Jaime, 28050 Madrid (ES); Perez Garcia, Pablo, 28050 Madrid (ES); Villegas Nuñez, Alvaro, 28050 Madrid (ES)
(74) Representative: Nokia EPO representatives

(56) References cited:
- WO-A1-2013/033565
- US-A1- 2012 158 988
- US-A1- 2014 189 066

## Description

### BACKGROUND OF THE INVENTION

### Technical field

The present invention relates to the delivery of multimedia contents (e.g., text, audio, video, software, etc., and any combination of them) which use an adaptive streaming format in communications networks. More particularly, the present invention relates to the avoidance of congestion at Transmission Control Protocol (TCP) servers in adaptive streaming delivery systems.

### Description of related art

Servers providing video fragments delivery for Adaptive Video Streaming usually suffer TCP congestion when some requests are received grouped in bursts. This is mainly caused because the available network bandwidth for the video delivery from the server to the client is used to be limited to a maximum (by network bandwidth capacity or by network latency and intermediate TCP buffers queues). If the server is very fast in the video segments delivery, the answer from the server to the client to attend the requests grouped in bursts causes the activation of the TCP congestion algorithms (that limit the server delivery throughput). The TCP congestion algorithms can cause retransmissions and even the lost of connection, even if the required delivery bandwidth is below the available.

Several TCP congestion algorithms could be optimized for video delivery in particular situations, in order to control how the TCP traffic can be reestablished or limited.

Many variables are involved in TCP Throughput performance, but the most representative maybe the following:
- BB (Bottleneck Bandwidth)
- RTT (Round-Trip Time)
- Send and Receive Socket Buffers
- Minimum TCP RWND (Receive Window)
- Path MTU (Maximum Transmission Unit)

Then if the available bandwidth is reached, TCP congestion algorithms cause several problems to the server:
- Some TCP packets could be retransmitted, causing more network traffic.
- Some TCP connections could be lost, causing server failures to the clients.
- Sever TCP queues grow requiring more Server resources to store the information pending to be sent.
- Server CPU is required to deal with TCP contention algorithms.

When the performance of the servers is high (i.e., servers are able to deliver the requested files very quickly), as soon as the HTTP fragment requests are received in the server side (typically in the order of 1Kbyte requests), the requested files (video fragments typically in the order of 1 Mbytes) are sent to the requesters.

But none of the TCP (this is OSI Layer 4, Transport link on the server side, TCP) congestion algorithms are aware of the kind of transport that is delivered for Adaptive Video Streaming delivery (this is OSI Layer 6, Application, HTTP Adaptive Video Streaming).

Therefore, there is a need of an improvement at Application level (OSI Layer 6) to avoid TCP congestion when delivering HTTP Adaptive Video Streaming (HAS).

Prior art WO2013/033565A1 describes an adaptive HTTP streaming system, in which multiple requests for segments may be pipelined or aggregated at a client to avoid repetitious TCP startup delays.

### SUMMARY

In light of the present need for providing servers with a method for avoiding TCP congestion in HAS scenarios which overcomes the aforementioned drawbacks, the present invention provides a method and device (network element) for smoothly redistributing media file requests before they are received by the server application.

The present invention redistributes the requests by taking into account one or more or a combination of the following parameters measured in the network:
- The size of the requested file, which in some of HTTP Adaptive Bit Rate (ABR) delivery systems can be inferred from the requested URL syntax of the file
- The maximum tolerated burst that can be supported in a period of time
- The maximum available network interface bandwidth
- The maximum tolerated delay that can be introduced by the smoothing
- IP addresses of the clients requesting the media files: The proposed smoothing algorithm can be applied to requests related to certain ranges of IP addresses and, then, the server can smooth the downstream flow of requests by client ranges.

The proposed smoothing algorithm can be implemented in a driver of a TCP Server or in an intermediate device that processes all the file requests from the clients.

In a preferred embodiment of the invention, the request redistribution is implemented by introducing an artificial delay in some of the received requests. Furthermore, the proposed solution can include also a maximum acceptable delay which is introduced in order to guarantee a smooth redistribution of the requests in a given time interval.

The proposed delay is applied to a group of one or more file requests which complies with a criterion based on one or more of the aforementioned parameters for smoothing.

Some simplifications and omissions may be made in the present summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

According to an aspect of the invention a method Is provided for distributing requests of files comprising multimedia content to be delivered in HTTP adaptive streaming, wherein the distribution step comprises defining a group of requests from all the file requests received (e.g. at a adaptive streaming deliver server input) in a determined time interval, the group of requests meeting a pattern based on one or more smoothing parameters, and applying a delay (e.g., maximum tolerated delay) to the defined group of requests. This step is repeated every determined time interval for redistributing file requests and delivering the requested file of multimedia content to a client by a delivery application according to said distribution. The distribution step is perfumed before the file requests are received from the client by the delivery application.

According to another aspect of the invention a device for distributing multimedia content (e.g., video) file requests, which is a network element connected to a HTTP adaptive streaming delivery system, is provided comprising means for implementing the method described before. The proposed device can be a server (e.g., a driver loadable in the server implements the proposed congestion avoidance algorithm) or an intermediate device.

According to a last aspect of the invention, a computer program product is provided, comprising computer-executable instructions for performing any of the steps of the method previously disclosed, when the program is run on a computer and a digital data storage medium is also provided encoding a machine-executable program of instructions to perform any of the steps of the method previously disclosed.

These and other aspects of the invention will be apparent from and elucidated with reference to the embodiments described hereinafter.

The presented embodiments potentially have the following advantages when compared with the prior art:
- The proposed method provides servers more robust than servers that do not implement the proposed congestion avoidance method and allows a better service in real deployment of massive Video Streaming Delivery Services.
- The proposed method improves the deployment of massive services where occasional bursting requests are generated randomly by many different reasons (e.g., network devices, network routers, network firewalls, OTT deployments,...).

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a graphical representation of file requests number distribution along time, in a possible network scenario using a requests distribution method known in the state of the art.
Figure 2 shows a graphical representation of Mean TCP bandwidth versus time, under the scenario and requests distribution method of Figure 1.
Figure 3 shows a graphical representation of Maximum TCP bandwidth versus time, under the scenario and requests distribution method of Figure 1.
Figure 4 shows a graphical representation of Minimum TCP bandwidth versus time, under the scenario and requests distribution method of Figure 1.
Figure 5 shows a graphical representation of the average response and download time of a file fragment for adaptive streaming delivery, under the scenario and requests distribution method of Figure 1.
Figure 6 shows a graphical representation of file requests number distribution along time, in a possible network scenario using a smooth redistribution method for requests in accordance with a preferred embodiment of the present invention.
Figure 7 shows a graphical representation of Maximum TCP bandwidth versus time, under the scenario and requests redistribution method of Figure 6 according to a preferred embodiment of the present invention.
Figure 8 shows a graphical representation of Mean TCP bandwidth versus time, under the scenario and requests redistribution method of Figure 6 according to a preferred embodiment of the present invention.
Figure 9 shows a graphical representation of Minimum TCP bandwidth versus time, under the scenario and requests redistribution method of Figure 6 according to a preferred embodiment of the present invention.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

In a possible embodiment of the invention, the following smoothing algorithm can be implemented in a TCP network driver:
- Smoothly distributing each received Adaptive Video Fragment request, e.g., being filtered by syntax URL to GET *.ts, by introducing a maximum delay of 40 milliseconds.
- Identifying two groups of requests: a first group for the requests from clients in the ranges of IP addresses from 192.168.12.0 to 192.168.12.255, and a second group for the requests from clients in the ranges of IP addresses from 192.168.13.0 to 192.168.13.255.

In this embodiment of the invention, the algorithm in the TCP driver is transparent to all the HTTP GET requests except to the GET *.ts requests. All the received requests with this pattern are then delayed 40 milliseconds, and, after 40 milliseconds, a scheduler sends all the received requests perfectly redistributed in the next 40 milliseconds, with a constant delay between one and the next request. This redistribution of requests can be recalculated every millisecond.

In another possible embodiment of the invention, the following smoothing algorithm can be implemented in a TCP network driver:
- Smoothly distributing the received Adaptive Video Fragment request, e.g., being filtered by syntax URL to GET /*QualityLevels($number)*/*Fragments(video=*),* by introducing a maximum delay of 40 milliseconds, accordingly to the bitrate *$number* of the requested fragment.

In this alternative embodiment of the invention, the algorithm in the TCP driver is transparent to all the HTTP GET requests except to the GET /*QualityLevels($number)*/*Fragments(video=*)* requests. All the received requests with this pattern are delayed 40 milliseconds and, after 40 milliseconds, a scheduler is sending all the received requests perfectly redistributed in the next 40 milliseconds. The delay between a request, request₋₁, and the next consecutive request, request₋₂, is proportional to the bitrate *$number* and indirectly proportional to the sum of all the values of this field *$number* on the 40 milliseconds slot. The delay after request₋₁, is equal to [40ms*(($number of request-1)/(sum of all the $number of requests received in the 40 milliseconds))]. This redistribution of requests can be recalculated every millisecond.

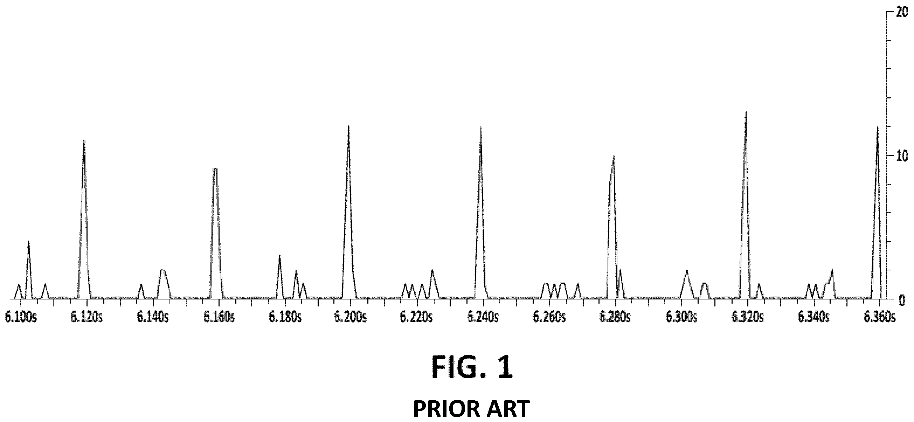

Figure 1 shows an example of a scenario for a real test case, in which 3000 HLS Adaptive Streaming simulated clients asking for HLS fragments, representing the number of file requests per millisecond (ms). No. of requests is represented in the vertical axe and time (just a detail of one second range) is represented in the horizontal axe. The requests are grouped in small burst every 40 ms.

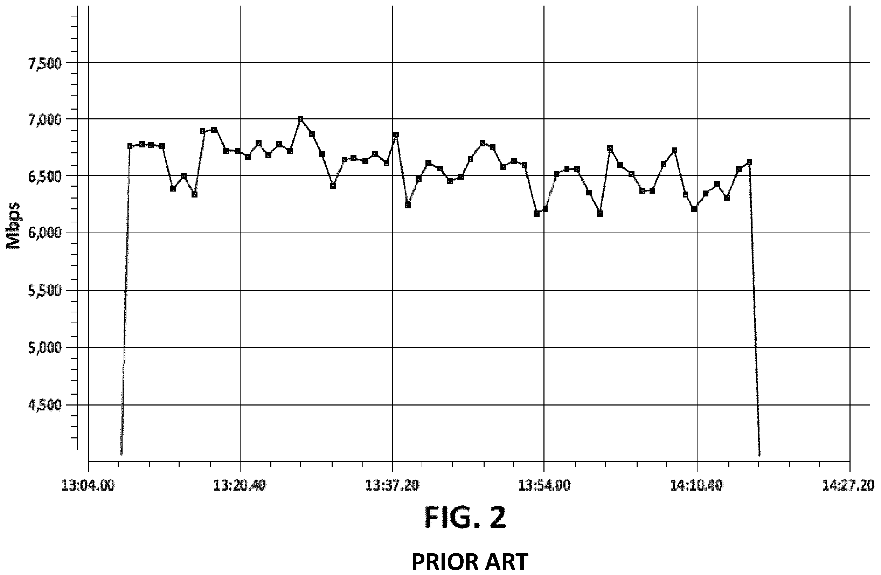

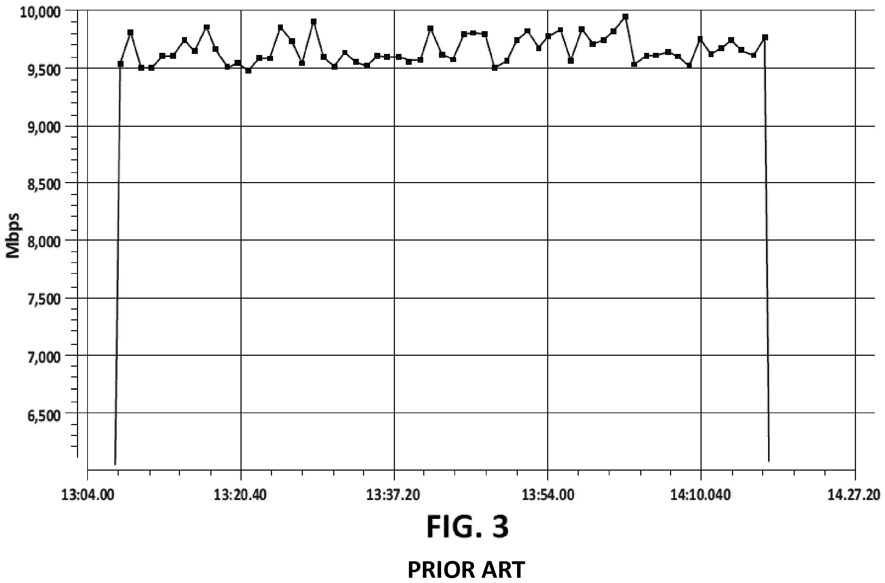

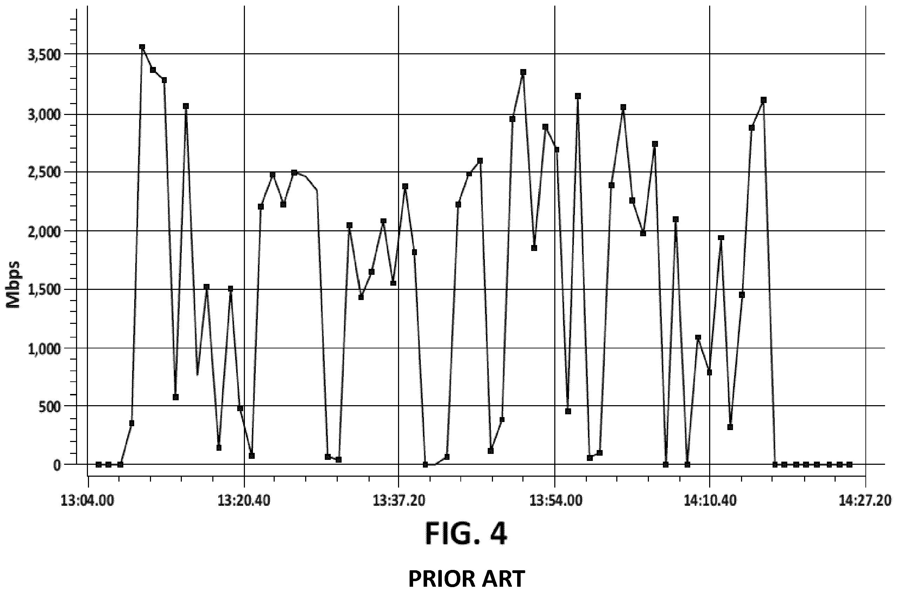

In the proposed scenario of Figure 1, an average of 6.5 Gbits per second over a 10Gbps Ethernet interface is required as shown in Figure 2, which represents the mean server output bandwidth (in Megabits per second) versus time. In this scenario, the burst in the client requests, reaching peaks of more than 10 requests in the same millisecond, cause the interface to reach instant TCP bandwidth peaks of Maximum available bandwidth, almost up to 10 Gbps, as shown in Figure 3. These peaks cause the TCP congestion algorithms activation and the bursting causes the TCP Minimum bandwidth measured at instant intervals, shown in Figure 4, to be very low compared to the Mean bandwidth of Figure 2.

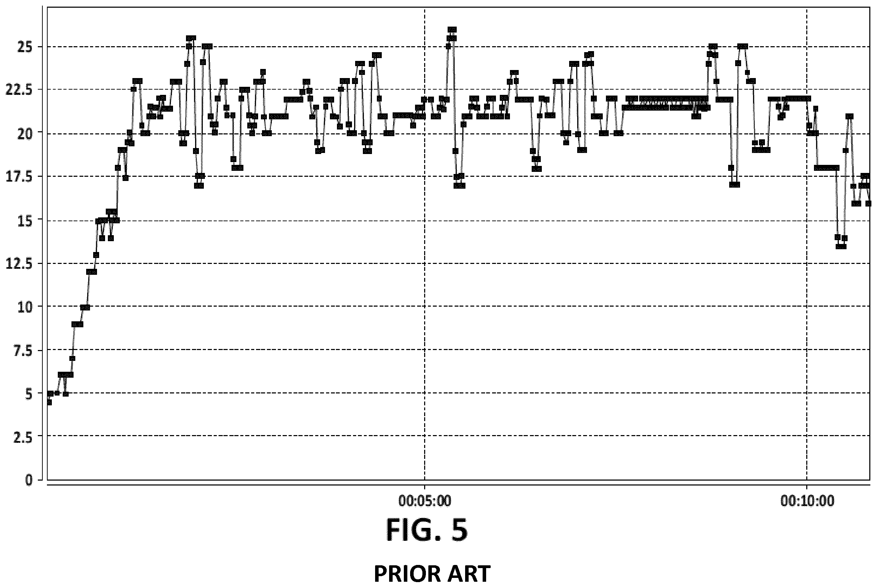

Figure 5 shows that the average delivery time of a file fragment (media segment) during this test, using adaptive streaming delivery, is around 20ms.

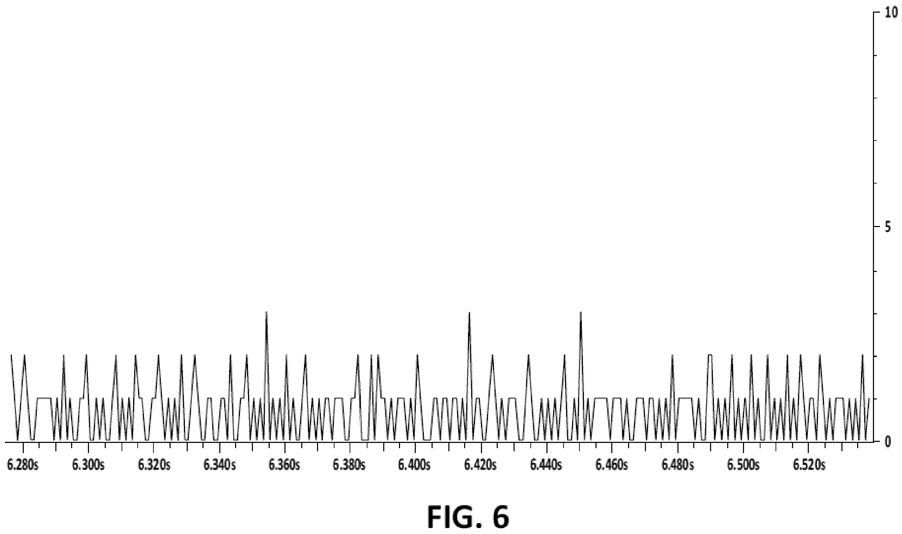

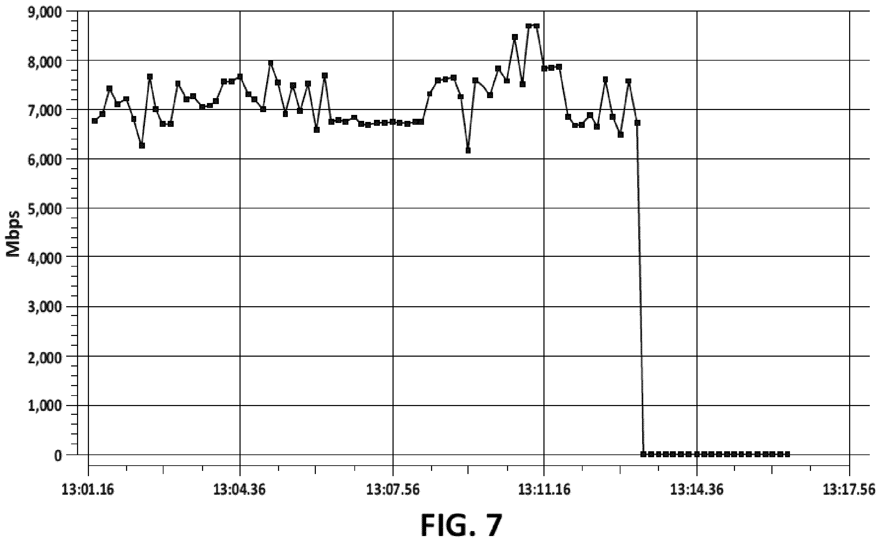

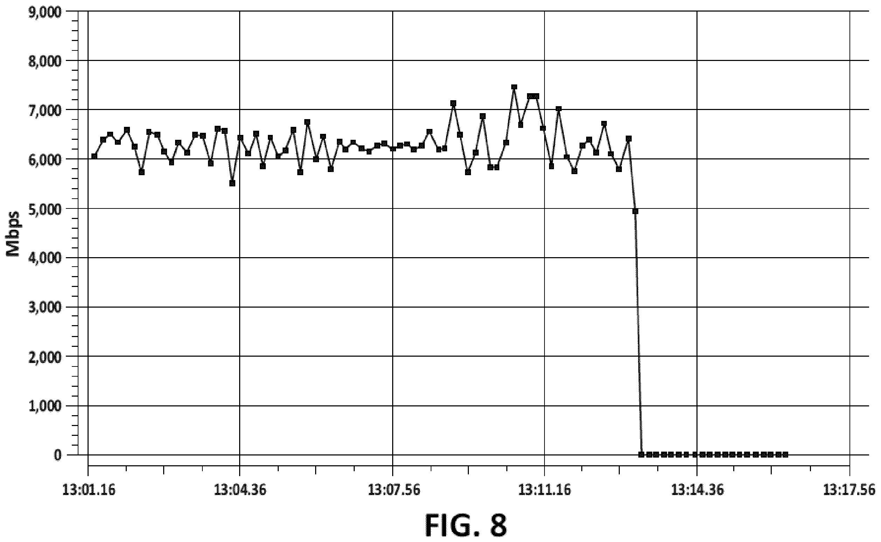

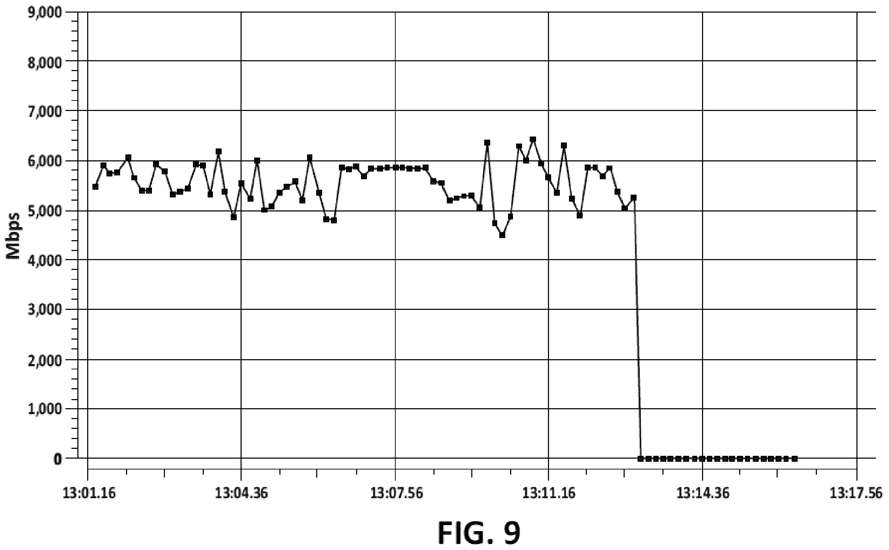

According to an embodiment of the invention, for the purpose of avoiding the aforementioned bursting in the network that causes the TCP congestion in the server output, instead of receiving the requests grouped as in Figure 1, the server receives the requests as shown in Figure 6: The requests received in the burst are redistributed by introducing a maximum delay in some of them. Therefore, the instant Maximum and instant Minimum TCP bandwidths, shown in Figures 7 and 9 respectively, are very similar to the Mean TCP bandwidth shown in Figure 8.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. The invention is defined by the scope of the independent claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for distributing file requests of multimedia content to be delivered in adaptive streaming, comprising:
- receiving file requests from at least a client and performing a distribution of the received file requests to deliver the requested file of multimedia content to the client by a delivery application according to the distribution, **characterised in that** the step of distribution of the received file requests is performed before the file requests are received by the delivery application and comprises:
- filtering a group of requests from the received file requests in a determined time interval based on at least one smoothing parameter which is selected from: an estimated size of the requested file, a maximum burst tolerated in a period of time, a maximum available network interface bandwidth to deliver the requested file, a maximum delay tolerated for smoothing the requested file and a range of IP addresses of the client;
- applying a delay, which is constant or bitrate-dependent, to the filtered group of requests, to distribute said filtered group of requests over time;
and the method further comprising repeating the step of distribution every determined time interval.

2. A network element of an adaptive streaming system for distributing file requests of multimedia content, comprising:
- means for receiving file requests from at least a client
**characterised by** further comprising:
- a delivery application to deliver a requested file of multimedia content to a client,
- means for distributing the received file requests configured for performing a distribution of the received file requests before the file requests are received by the delivery application and the means for distributing the received file requests configured for:
- filtering a group of requests from the received file requests in a determined time interval based on at least one smoothing parameter which is selected from: an estimated size of the requested file, a maximum burst tolerated in a period of time, a maximum available network interface bandwidth to deliver the requested file, a maximum delay tolerated for smoothing the requested file and a range of IP addresses of the client;
- applying a delay, which is constant or bitrate-dependent, to the filtered group of requests, to distribute said filtered group of requests over time;
- repeating the step of distribution every determined time interval.

3. The network element according to claim 2, which is a HTTP adaptive streaming server.

4. The network element according to claim 2, which is an intermediate node connected to an adaptive streaming server.

5. A computer program product comprising computer-executable instructions for performing the method according to claim 1, when the program is run on a computer.

6. A digital data storage medium encoding a machine-executable program of instructions to perform a method according to claim 1.

## Patentansprüche

1. Verfahren zum Verteilen von Dateianforderungen von Multimedia-Inhalt zur Bereitstellung im adaptiven Streaming, umfassend:
- Empfangen der Dateianforderungen von wenigstens einem Client und Durchführen einer Verteilung der empfangenen Dateianforderungen, um die angeforderte Datei mit Multimedia-Inhalt durch eine Bereitstellungsanwendung gemäß der Verteilung an den Client bereitzustellen,
**dadurch gekennzeichnet, dass** der Schritt des Verteilens der empfangenen Dateianforderungen durchgeführt wird, bevor die Dateianforderungen von der Bereitstellungsanwendung empfangen werden, und umfasst:
- Filtern einer Gruppe von Anforderungen von den empfangenen Dateianforderungen in einem bestimmten Zeitintervall aufbauend auf wenigstens einem Glättungsparameter, der ausgewählt wird aus: einer geschätzten Größe der angeforderten Datei, einem maximalen Bitbündel, das innerhalb eines Zeitraums toleriert wird, einer maximalen verfügbaren Netzschnittstellenbandbreite zum Bereitstellen der angeforderten Datei, einer maximalen tolerierten Verzögerung zum Glätten der angeforderten Datei und einem Bereich von IP-Adressen des Clients;
- Anwenden einer Verzögerung, die konstant oder bitratenabhängig ist, auf die gefilterte Gruppe von Anforderungen, um die gefilterte Gruppe von Anforderungen im Zeitverlauf zu verteilen;
und wobei das Verfahren ferner das Wiederholen des Schritts der Verteilung für jedes bestimmte Zeitintervall umfasst.

2. Netzelement eines adaptiven Streaming-Systems zum Verteilen von Dateianforderungen von Multimedia-Inhalt, umfassend:
- ein Mittel zum Empfangen von Dateianforderungen von wenigstens einem Client, **dadurch gekennzeichnet, dass** es ferner umfasst:
- eine Bereitstellungsanwendung zum Bereitstellen einer angeforderten Datei von Multimedia-Inhalt an einen Client,
- ein Mittel zum Verteilen der empfangenen Dateianforderungen, um eine Verteilung der empfangenen Dateianforderungen durchzuführen, bevor die Dateianforderungen von der Bereitstellungsanwendung empfangen werden, und wobei das Mittel zum Verteilen der empfangenen Dateianforderungen konfiguriert ist zum:
- Filtern einer Gruppe von Anforderungen von den empfangenen Dateianforderungen in einem bestimmten Zeitintervall aufbauend auf wenigstens einem Glättungsparameter, der ausgewählt wird aus: einer geschätzten Größe der angeforderten Datei, einem maximalen Bitbündel, das innerhalb eines Zeitraums toleriert wird, einer maximalen verfügbaren Netzschnittstellenbandbreite zum Bereitstellen der angeforderten Datei, einer maximalen tolerierten Verzögerung zum Glätten der angeforderten Datei und einem Bereich von IP-Adressen des Clients;
- Anwenden einer Verzögerung, die konstant oder bitratenabhängig ist, auf die gefilterte Gruppe von Anforderungen, um die gefilterte Gruppe von Anforderungen im Zeitverlauf zu verteilen;
- Wiederholen des Schritts der Verteilung für jedes bestimmte Zeitintervall.

3. Netzelement nach Anspruch 2, das ein adaptiver HTTP-Streaming-Server ist.

4. Netzelement nach Anspruch 2, das ein Zwischenknoten ist, der mit einem adaptiven Streaming-Server verbunden ist.

5. Computerprogrammprodukt, das von einem Computer ausführbare Anweisungen zum Durchführen des Verfahrens nach Anspruch 1 bei Ausführung des Programms auf einem Computer umfasst.

6. Digitales Datenspeichermedium, das ein von einer Maschine ausführbares Programm von Anweisungen zum Durchführen eines Verfahrens nach Anspruch 1 codiert.

## Revendications

1. Procédé de distribution de demandes de fichier de contenu multimédia à délivrer en diffusion en continu adaptative, comprenant :
- la réception de demandes de fichier à partir d'au moins un client et l'exécution d'une distribution des demandes de fichier reçues pour délivrer le fichier demandé de contenu multimédia au client au moyen d'une application de livraison conformément à la distribution,
**caractérisé en ce que** l'étape de distribution des demandes de fichier reçues est exécutée avant que les demandes de fichier ne soient reçues par l'application de livraison et comprend les étapes suivantes :
- filtrer un groupe de demandes à partir des demandes de fichier reçues dans un intervalle de temps déterminé sur la base d'au moins un paramètre de lissage qui est choisi parmi : une taille estimée du fichier demandé, une rafale maximale tolérée durant une certaine période, une bande passante d'une interface réseau disponible maximale pour délivrer le fichier demandé, un délai maximal toléré pour le lissage du fichier demandé et une plage d'adresses IP du client ;
- appliquer un délai, qui est constant ou qui dépend du débit binaire, au groupe filtré de demandes, pour distribuer ledit groupe filtré de demandes dans le temps ;
et le procédé comprenant en outre la répétition de l'étape de distribution à chaque intervalle de temps déterminé.

2. Élément de réseau d'un système de diffusion en continu adaptative pour distribuer des demandes de fichier de contenu multimédia, comprenant :
- des moyens de réception de demandes de fichier provenant d'au moins un client **caractérisé en ce qu'il** comprend en outre :
- une application de livraison pour délivrer un fichier demandé de contenu multimédia à un client,
- des moyens de distribution des demandes de fichier reçues conçus pour exécuter une distribution des demandes de fichier reçues avant que les demandes de fichier ne soient reçues par l'application de livraison et les moyens de distribution des demandes de fichier reçues étant conçus pour :
- filtrer un groupe de demandes à partir des demandes de fichier reçues dans un intervalle de temps déterminé sur la base d'au moins un paramètre de lissage qui est choisi parmi : une taille estimée du fichier demandé, une rafale maximale tolérée durant une certaine période, une bande passante d'une interface réseau disponible maximale pour délivrer le fichier demandé, un délai maximal toléré pour le lissage du fichier demandé et une plage d'adresses IP du client ;
- appliquer un délai, qui est constant ou qui dépend du débit binaire, au groupe filtré de demandes, pour distribuer ledit groupe filtré de demandes dans le temps ;
- répéter l'étape de distribution à chaque intervalle de temps déterminé.

3. Élément de réseau selon la revendication 2, qui est un serveur de diffusion en continu adaptative HTTP.

4. Élément de réseau selon la revendication 2, qui est un noeud intermédiaire connecté à un serveur de diffusion en continu adaptative.

5. Produit de programme informatique comprenant des instructions exécutables par un ordinateur pour réaliser le procédé selon la revendication 1, lorsque le programme est exécuté sur un ordinateur.

6. Support de stockage de données numériques codant un programme d'instructions exécutable par une machine pour réaliser un procédé selon la revendication 1.
